# EUROPEAN PATENT APPLICATION

(11) **EP 2 228 736 A1**
(43) Date of publication of application: **15.09.2010**
(21) Application number: 10153828.8
(22) Date of filing: 17.02.2010
(51) Int. Cl.: G06F 17/30, G06Q 30/00

(54) **System and method for effectively utilizing a transport operator in an electronic network**

(30) Priority: 09.03.2009 US 381164
(71) Applicant: Sony Corporation, Minato-ku Tokyo 108-0075 (JP); Sony Electronics Inc., Park Ridge, NJ 07656 (US)
(72) Inventor: Loughery, Donald, 90803 California (US); Noronha, Austin, 94086 California (US); Rainier, Rajiv, San Diego 94086 California (US); Frazier, Milton, San Marcos 92069 California (US); Smith, Tim, Carlsbad 92011 California (US); Jacobs, Stephan, New York 10022 (US)
(74) Representative: Jackson, Jonathan Andrew

(57) **Abstract**

A system and method for effectively utilizing a transport operator in an electronic network includes an information service that is configured to provide information distribution services by performing an information distribution procedure through an electronic network. User devices are provided for device users to communicate with the information service for receiving the information distribution services. Transport structures are utilize for communicating with the user devices to provide selected content and advertising information from the information service to targeted ones of the device users. The transport operator performs various appropriate transport management functions to effectively support the foregoing information distribution procedure.

## Description

This invention relates generally, but not exclusively, to techniques for distributing electronic information, and relates more particularly to a system and method for effectively utilizing a transport operator in an electronic network.

Implementing effective methods for distributing electronic information is a significant consideration for designers and manufacturers of contemporary electronic systems. However, effectively distributing electronic information utilized by electronic devices may create substantial challenges for system designers. For example, enhanced demands for increased device functionality and performance may require more system processing power and require additional software resources. An increase in processing or software requirements may also result in a corresponding detrimental economic impact due to increased production costs and operational inefficiencies.

Furthermore, enhanced system capability to perform various advanced distribution operations may provide additional benefits to a system user, but may also place increased demands on the control and management of various system components. For example, an electronic system that effectively manages electronic advertising information may benefit from an effective implementation because of the large amount and complexity of the digital data involved.

Due to growing demands on system resources and substantially increasing data magnitudes, it is apparent that developing new techniques for distributing electronic information to electronic devices is a matter of concern for related electronic technologies. Therefore, for all the foregoing reasons, developing effective techniques for distributing electronic information remains a significant consideration for designers, manufacturers, and users of contemporary electronic devices.

In accordance with the present invention, a system and method for effectively utilizing a transport operator in an electronic network are disclosed. In one embodiment, a distribution system automatically provides various types of appropriate information for utilization by device users of corresponding user devices. For example, the distributed information may include, but is not limited to, commercial advertising information that is targeted towards specific device users, Unlike traditional advertising techniques that support a "pull" model that requires consumers to actively access desired advertising information, the foregoing distribution system supports a "push" model that automatically selects and transmits appropriate advertising information to targeted device users based upon corresponding metadata files that define both the device users and the various advertisers.

In one embodiment, the distribution system may support and utilize one or more transport structures that automatically transport various types of relevant information to and from appropriate entities in the distribution system. For example, the transport structures may be utilized to gather and transfer metadata regarding the various device users, the user devices, the electronic network, and respective advertisers from an information service. In addition, the transport structures may also be utilized to transport targeted advertisements and/or electronic content to appropriate user devices.

In accordance with embodiments of the present invention, the distribution system effectively utilizes a transport operator from a transport server for providing a robust and coordinated means to manage and support various distribution services. For example, the transport operator may generate and display a dashboard graphical user interface (GUI) that allows a system administrator to track and interact with the movement and activity of all the transport structures under its control. The transport operator controls each transport structure's initial launch, ongoing transport movements, and authorizes the loading and unloading of information, advertising, and content at licensed docking ports.

The transport operator may also maintain storage repositories in local regions around the globe for receiving, working on, and staging the pickup, transport, and delivery of information, advertising, and content to and from authorized recipients. In addition, the transport operator provides routing instructions to the transport structures based upon the most economical transport routes, bit transfer rates, and negotiates these terms with Internet Service Providers (ISPs) and fiber-optic bandwidth providers for the most cost-effective transport of information, advertising, and content.

In certain embodiments, the transport operator maintains comprehensive metadata logs for each transport structure, including its current inventory of information, advertising, and content, it's docking ports, loading and off loading of information, advertising, content, bit rates, and the routes and transmission pipelines traveled. The transport operator also functions as an aggregator of device users for direct commercial messaging from advertisers based upon user-licensed profiles which are constantly updated with private consumer information provided to the transport operator from user devices and continually uploaded to the transport structures.

The transport operator may then release this consumer information (pursuant to the device user's licensed authorization) to the advertisers that fit the consumer's requested product or service needs. The transport operator may negotiate with the advertisers a price for accessing the consumer, including best product pricing, best product or service terms, and best cost-per-thousand (CPM) as the fee to the transport operator.

The transport operator may also package for the device users both the commercial messaging and the device users' predictive or intuitive content choices for advertiser-supplied viewing, if enough device users are aggregated in a commercial messaging pod and a like-content match occurs to trigger the packaged release. For at least the foregoing reasons, the present invention therefore provides an improved system and method for effectively utilizing a transport operator in an electronic network.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
FIG. 1 is a block diagram of a distribution system, in accordance with one embodiment of the present invention;
FIG. 2 is a block diagram for one embodiment of a transport structure, in accordance with the present invention;
FIG. 3 is a block diagram for one embodiment of a user device from FIG. 1, in accordance with the present invention;
FIG. 4 is a block diagram for one embodiment of the user memory from FIG. 3, in accordance with the present invention;
FIG. 5 is a block diagram for one embodiment of the information service from FIG. 1, in accordance with the present invention;
FIG. 6A is a block diagram for one embodiment of the transport server from FIGS. 5 and 7, in accordance with the present invention;
FIG. 6B is a block diagram for one embodiment of the transport server memory from FIG. 6A, in accordance with the present invention;
FIG. 7 is a block diagram for an alternate embodiment of the information service from FIG. 1, in accordance with the present invention;
FIG. 8 is a block diagram for one embodiment of a repository from FIG. 5, in accordance with the present invention;
FIG. 9 is a block diagram for one embodiment of the transport operator from FIG. 6B, in accordance with the present invention; and
FIG. 10 is a block diagram for one embodiment of transport operator data, in accordance with the present invention.

The present invention relates to an improvement in electronic data distribution techniques. The following description is presented to enable one of ordinary skill in the art to make and use the invention, and is provided in the context of a patent application and its requirements. Various modifications to the disclosed embodiments will be apparent to those skilled in the art, and the generic principles herein may be applied to other embodiments. Therefore, the present invention is not intended to be limited to the embodiments shown, but is to be accorded the widest scope consistent with the principles and features described herein.

The present invention comprises a system and method for effectively utilizing a transport operator in an electronic network, and includes an information service that is configured to provide information distribution services by performing an information distribution procedure through an electronic network. User devices are provided for device users to communicate with the information service for receiving the information distribution services. Transport structures are utilized for communicating with the user devices to provide selected content and advertising information from the information service to targeted ones of the device users. The transport operator performs various appropriate transport management functions to effectively support the foregoing information distribution procedure.

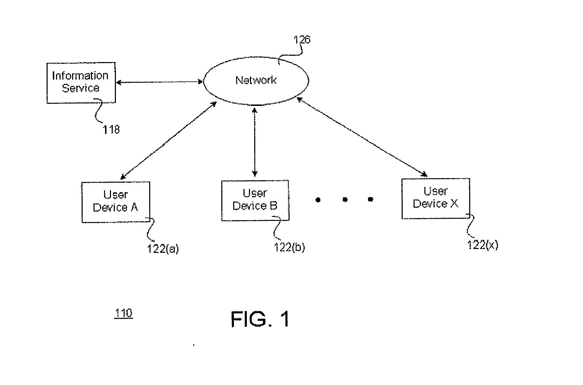

Referring now to FIG. 1, a block diagram of a distribution system 110 is shown, in accordance with one embodiment of the present invention. In the FIG. 1 embodiment, distribution system 110 may include, but is not limited to, one or more user devices 122, an information service 118, and a network 128. In alternate embodiments, distribution system 110 may be implemented by utilizing components and configurations in addition to, or instead of, certain of those components and configurations discussed in conjunction with the FIG. 1 embodiment.

In accordance with the present invention, distribution system 110 advantageously supports a distribution procedure that automatically provides various types of appropriate information for utilization by device users of corresponding user devices 122. For example, the distributed information may include, but is not limited to, commercial advertising information that is specifically targeted towards appropriate device users of user devices 122. Unlike traditional advertising techniques that support a "pull" model that requires consumers to actively access desired advertising information, the FIG. 1 distribution system 110 supports a "push" model that automatically selects and transmits appropriate advertising information to targeted device users based upon corresponding metadata that defines both the device users and the various advertisers. In the FIG. 1 embodiment, distribution system 110 may be implemented and supported by a distribution control entity that offers distribution services to both advertisers and device users in return for financial or other compensation. The distribution control entity may be a commercial enterprise that maintains and controls key elements of distribution system 110 such as the information service 118.

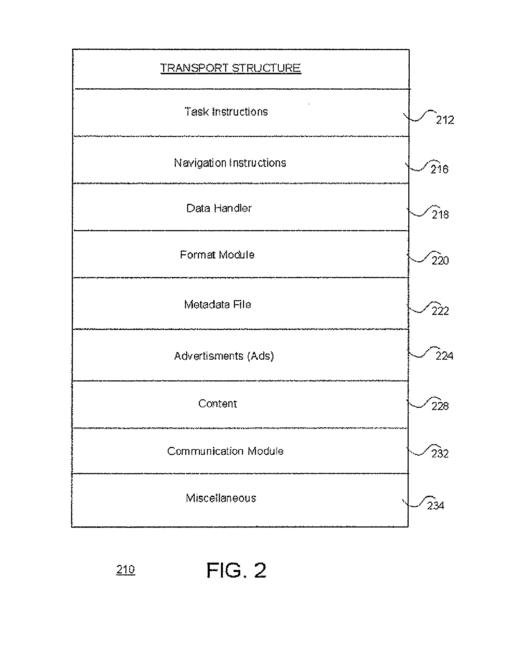

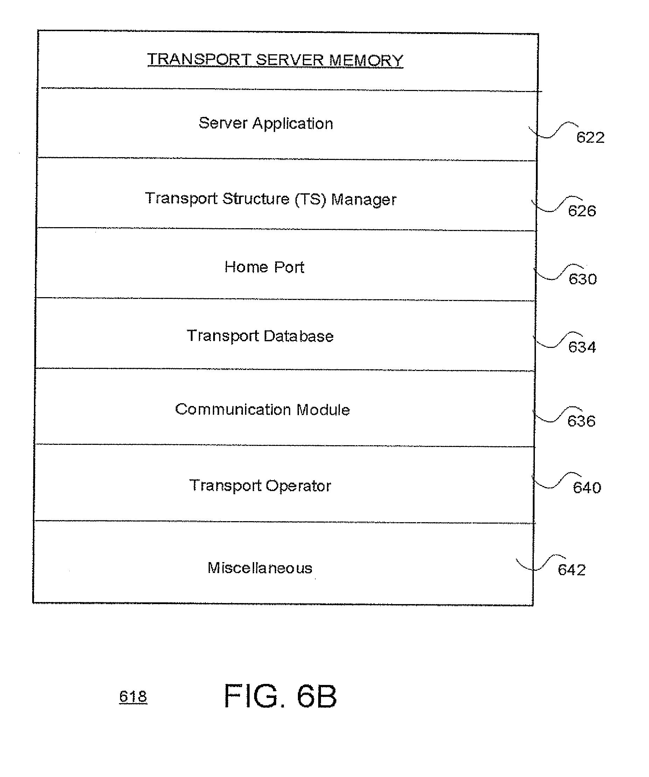

In accordance with the present invention, distribution system 110 may advantageously utilize a transport operator (see FIG. 6B) to control and manage one or more transport structures (see FIG. 2) that automatically transport various types of relevant information to and from appropriate entities in distribution system 110. The transport operator may be implemented in any effective manner. For example, in certain embodiments, the transport operator may be implemented as part of information service 118 or as an entity elsewhere in network 126. In certain embodiments, transport operator may utilize the transport structures to gather and transfer metadata regarding the various device users, the user devices 122, the network 126, and respective advertisers from information service 118. In addition, the transport structures may also be utilized to transport targeted advertisements and/or electronic content to appropriate user devices 122. The present invention thus proves an improved system and method for utilizing a transport operator to perform a distribution procedure. Further details regarding the implementation and utilization of a transport operator in the FIG. 1 distribution system 110 are discussed below in conjunction with FIGS. 2-10.

Referring now to FIG. 2, a block diagram for one embodiment of a transport structure 210 is shown, in accordance with the present invention. The FIG. 2 embodiment is presented for purposes of illustration, and in alternate embodiments, transport structures 210 may be implemented by utilizing components and configurations in addition to, or instead of, certain of those components and configurations discussed in conjunction with the FIG. 2 embodiment.

In the FIG. 2 embodiment, task instructions 212 may include any appropriate instructions or other information that indicate specific tasks, operations, functions, or steps for performance by transport structure 210. For example, in certain embodiments, task instructions 212 may include detailed instructions describing the type of information that transport structure 210 is directed to collect and/or distribute. In the FIG. 2 embodiment, navigation instructions 216 may include any appropriate instructions or other information that provide specific navigational directions or limitations for transport structure 210. For example, in certain embodiments, navigation instructions 216 may define at least one navigation path that is defined by one or more origin points and one or more destination points.

In the FIG. 2 embodiment, data handler 218 may include any appropriate means for allowing transport structure 210 to bi-directionally communicate with other devices in distribution system 110 (FIG. 1) for uploading or downloading desired information. In the FIG. 2 embodiment, transport structure 210 may utilize format module 220 to allow transport structure 210 to successfully communicate and utilize any different type of data or transmission formats, paths, or architectures.

In the FIG. 2 embodiment, metadata file 222 may include any type of collected and modifiable information related to any relevant entities coupled to distribution system 110. In the FIG. 2 embodiment, metadata file 222 may include, but is not limited to, user metadata, device metadata, network metadata, advertiser metadata, and content renderer metadata. In the FIG. 2 embodiment, user metadata may include information regarding one or more device users of user devices 122 (FIG. 1), and device metadata may include information regarding one or more user devices 122. In the FIG. 2 embodiment, network metadata may include information regarding various attributes or entities of electronic network 126 (FIG. 1). In the FIG. 2 embodiment, advertiser metadata may include information regarding one or more advertisers that are associated with distribution system 110. Similarly, content renderer metadata may include information regarding one or more content renderers that are associated with distribution system 110.

Various entities in distribution system 110 may utilize the information in metadata file 222 in any appropriate manner. For example, an ad targeting procedure may be performed by matching compatible elements of user metadata, device metadata, and advertiser metadata to thereby identify appropriate types of relevant advertising information for automatic transmission to targeted device users via transport structures 210.

In the FIG. 2 embodiment, advertisements (ads) 224 may include any appropriate type of targeted advertising information that has been selected for transmission to appropriate ones of the user devices 122 (FIG. 1). Similarly, content 228 may include any appropriate type of electronic content information that has been selected for transmission to appropriate ones of the user devices 122. For example, content 228 may include, but is not limited to, video data, audio data, graphics, text, movies, music recordings, and computer programs.

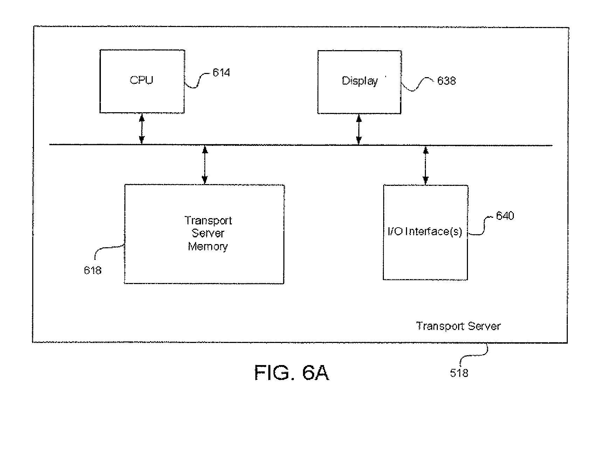

In the FIG. 2 embodiment, transport structure 210 may utilize communication module 232 for performing bi-directional electronic communication procedures with remote devices in distribution system 110. For example, in certain embodiments, communication module 232 may be utilized to communicate with a transport server (see FIG. 6) of information service 118. In the FIG. 2 embodiment, miscellaneous 234 information may include any additional information or data for utilization or for transfer by transport service 210.

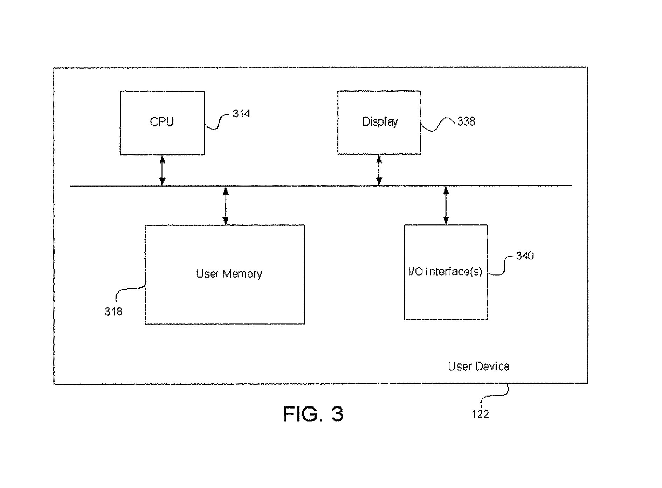

Transport structures 210 may be originated in any effective manner from any appropriate source. For example, transport structures 210 may be embedded in user devices 122 (FIG. 1), and activated by device users if desired. Alternately, various entities in network 126 or information service 118 may create or activate transport structures 210. For example, a transport server (see FIG. 6A) may manage the origination and operation of transport structures 210. Further details regarding control of the FIG. 2 transport structure 210 are discussed below in conjunction with FIGS. 3-10.

Referring now to FIG. 3, a block diagram for one embodiment of a FIG. 1 user device 122 is shown, in accordance with the present invention. In the FIG. 3 embodiment, user device 122 includes, but is not limited to, a central processing unit (CPU) 314, a memory 318, a display 338, and one or more input/output interface(s) (I/O interface(s)) 340. The FIG. 3 embodiment is presented for purposes of illustration, and in alternate embodiments, a user device 122 may be implemented using components and configurations in addition to, or instead of, certain of those components and configurations discussed in conjunction with the FIG. 3 embodiment. In addition, user device 122 may be implemented as any type of portable or non-portable electronic device, including, but not limited to, a desktop computer, a personal digital assistant, a cellular telephone, a settop box, or a laptop computer.

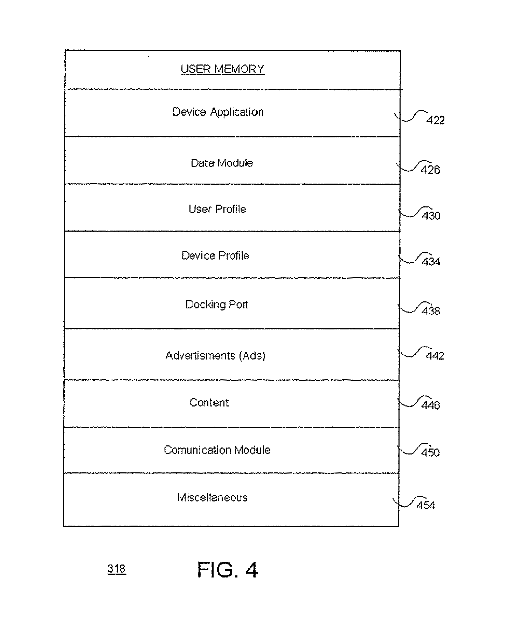

In the FIG. 3 embodiment, CPU 314 may be implemented to include any appropriate and compatible microprocessor device that preferably executes software instructions to thereby control and manage the operation of user device 122. The FIG. 3 display 338 may include any effective type of display technology including a cathode-ray-tube monitor or a liquid-crystal display device with an appropriate screen for displaying various information to a device user. In the FIG. 3 embodiment, I/O interface(s) 340 may include one or more input and/or output interfaces to receive and/or transmit any required types of information by user device 122. In the FIG. 3 embodiment, memory 318 may be implemented to include any combination of desired storage devices, including, but not limited to, read-only memory (ROM), random-access memory (RAM), and various types of non-volatile memory, such as floppy disks, memory sticks, compact disks, or hard disks. Additional details for the utilization of user device 122 are further discussed below in conjunction with FIGS. 4-10.

Referring now to FIG. 4, a block diagram for one embodiment of the FIG. 3 user memory 318 is shown, in accordance with the present invention. In alternate embodiments, user memories 318 may be implemented by utilizing components and configurations in addition to, or instead of, certain of those components and configurations discussed in conjunction with the FIG. 4 embodiment.

In the FIG. 4 embodiment, device application 422 may include program instructions that are preferably executed by CPU 314 to perform various functions and operations for user device 122. The particular nature and functionality of device application 422 typically varies depending upon factors such as the specific type and particular functionality of the corresponding user device 122. In the FIG. 4 embodiment, user device 122 utilizes data module 426 to manage a user profile 430 and a device profile 434 that collectively describe any desired attributes or characteristics related to user device 122 or a device user of user device 122. For example, user profile 430 may include, but is not limited to, information regarding a device user's name, gender, age, religion, hobbies, interests, occupation, marital status, residence, income, Internet browsing history, and credit-card transaction records. Similarly, device profile 434 may include, but is not limited to, a device type, a device manufacturer, supported device functionalities, and a device configuration.

In the FIG. 4 embodiment, docking port 438 may include any appropriate type of interface means to facilitate bi-directional communications between one or more transport structures 210 (FIG. 2) and a user device 122. In the FIG. 4 embodiment, advertisements (ads) 442 may include targeted advertising information that has been received from one or more transport structures 210 via distribution system 110 (FIG. 1) specifically for a device user of user device 122. Similarly, content 446 may include targeted electronic content information that has been received from one or more transport structures 210 via distribution system 110 (FIG. 1) specifically for a device user of user device 122.

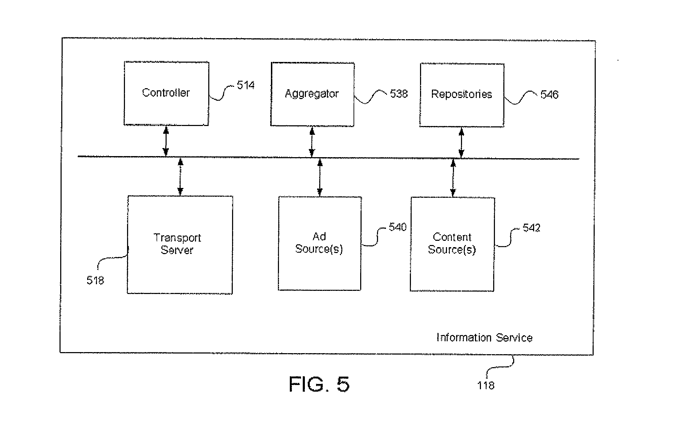

In the FIG. 4 embodiment, a user device 122 may utilize communication module 450 to perform bi-directional electronic communication procedures with any appropriate remote entity. In the FIG. 4 embodiment, miscellaneous information 454 may include any appropriate additional information or data for utilization by user device 122. For example, in certain embodiments, miscellaneous information 454 may include various types of metadata relating to other entities in distribution system 110 that was downloaded from one or more transport structures 210. Further details regarding the utilization of the FIG. 4 user memory 318 are discussed below in conjunction with FIGS. 5-10.

Referring now to FIG. 5, a block diagram for one embodiment of the FIG. 1 information service 118 is shown, in accordance with the present invention. In the FIG. 5 embodiment, information service 118 includes, but is not limited to, a controller 514, a transport server 518, an aggregator 538, one or more ad sources 540, one or more content sources 542, and one or more repositories 546. The FIG. 5 embodiment is presented for purposes of illustration, and in alternate embodiments, information service 118 may be implemented using components and configurations in addition to, or instead of, certain of those components and configurations discussed in conjunction with the FIG. 5 embodiment.

In the FIG. 5 embodiment, controller 514 may be implemented to include any effective control means for coordinating operating functionalities of information service 118. For example, in certain embodiments, controller 514 may be implemented as a computer device with a corresponding control application program that manages the operation of information service 118. Alternately, controller 514 may be implemented as a central processing unit that includes any appropriate and compatible microprocessor device for executing software instructions to thereby control and manage the operation of information service 118.

In the FIG. 5 embodiment, transport server 518 may include any effective means for communicating with and controlling one or more transport structures 210 (FIG. 2), in accordance with the present invention. Additional details regarding the implementation and utilization of transport server 518 are further discussed below in conjunction with FIGS. 6A and 6B. In the FIG. 5 embodiment, ad source(s) 540 may include one or more appropriate entities for providing advertisement information for dissemination by the transport structures 210 (FIG. 2) through distribution system 110 (FIG. 1). For example, ad sources 540 may include various commercial enterprises, specific advertisers, or advertising developers.

In the FIG. 5 embodiment, content source(s) 542 may include one or more appropriate entities for providing electronic content for dissemination by the transport structures 210 through distribution system 110. For example, content sources 542 may include various commercial enterprises, specific advertisers, or content producers. In the FIG. 5 embodiment, aggregator 538 may include any effective means for identifying and aggregating appropriate advertising information and/or electronic content for providing to targeted device users of user devices 122 (FIG. 1) by utilizing one or more transport structures 210 (FIG. 2).

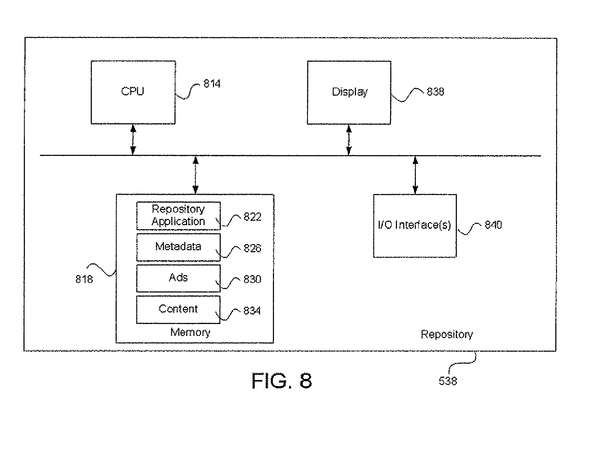

In the FIG. 5 embodiment, repositories 546 may include appropriate means for storing any type of information or data for distribution system 110 (FIG. 1). One embodiment of a repository 546 is further discussed below in conjunction with FIG. 8. Additional details for the implementation and utilization of information service 118 are further discussed below in conjunction with FIGS. 6-10.

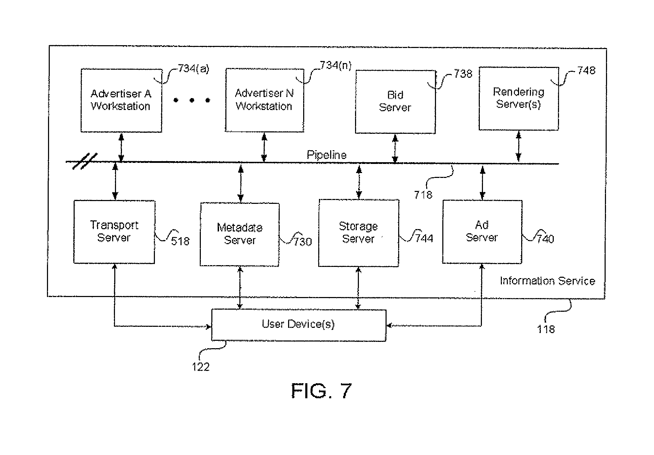

Referring now to FIG. 6A, a block diagram for one embodiment of the transport server 518 of FIGS. 5 and 7 is shown, in accordance with the present invention. In the FIG. 6A embodiment, transport server 518 includes, but is not limited to, a central processing unit (CPU) 614, a memory 618, a display 638, and one or more input/output interface(s) (I/O interface(s)) 640. The FIG. 6A embodiment is presented for purposes of illustration, and in alternate embodiments, transport servers 518 may be implemented using components and configurations in addition to, or instead of, certain of those components and configurations discussed in conjunction with the FIG. 6A embodiment.

In the FIG. 6A embodiment, CPU 614 may be implemented to include any appropriate and compatible microprocessor device that preferably executes software instructions to thereby control and manage the operation of transport server 518. The FIG. 6A display 638 may include any effective type of display technology including a cathode-ray-tube monitor or a liquid-crystal display device with an appropriate screen for displaying various information to a device user. In the FIG. 6A embodiment, I/O interface(s) 640 may include one or more input and/or output interfaces to receive and/or transmit any required types of information by user device 122. In the FIG. 6A embodiment, transport server memory 618 may be implemented to include any combination of desired storage devices, including, but not limited to, read-only memory (ROM), random-access memory (RAM), and various types of non-volatile memory, such as floppy disks, memory sticks, compact disks, or hard disks. Additional details regarding the implementation and utilization of transport server 518 are further discussed below in conjunction with FIGS. 6B-10.

Referring now to FIG. 6B, a block diagram for one embodiment of the FIG. 6A transport server memory 618 is shown, in accordance with the present invention. In the FIG. 6B embodiment, transport server memory 618 includes, but is not limited to, a server application 622, a transport structure (TS) manager 626, a home port 630, a transport database 634, a communication module 636, a transport operator 640, and miscellaneous information 642. In alternate embodiments, transport server memory 618 may be implemented by utilizing components and configurations in addition to, or instead of, certain of those components and configurations discussed in conjunction with the FIG. 6B embodiment.

In the FIG. 6B embodiment, server application 622 may include program instructions that are preferably executed by CPU 614 (FIG. 6A) to perform various functions and operations for transport server 518. The particular nature and functionality of server application 622 typically varies depending upon factors such as the specific type and particular functionality of the corresponding transport server 518.

In the FIG. 6B embodiment, the transport server 518 may utilize TS manager 626 to manage and coordinate various functions for one or more transport structures 210 (FIG. 2), in accordance with the present invention. In certain embodiments, TS manager 626 may include a registration module for coordinating registration procedures to register device users of user devices 122 for participating in various authorized distribution services from distribution system 110 (FIG. 1). In the FIG. 6B embodiment, home port 630 may be utilized to connect to and bi-directionally communicate with transport structures 210.

In the FIG. 6B embodiment, transport database 634 may includes any appropriate information for providing distribution services to various entities in distribution system 110. In certain embodiments, transport operator 640 may continually update respective transport information in transport database 634 to reflect the current status and past activity of distribution system 110. In the FIG. 6B embodiment, transport server 518 may utilize communication module 636 to perform bi-directional electronic communication procedures with any appropriate remote entity. For example, communication module 638 may be utilized to remotely communicate with transport structures 210 in distribution system 110.

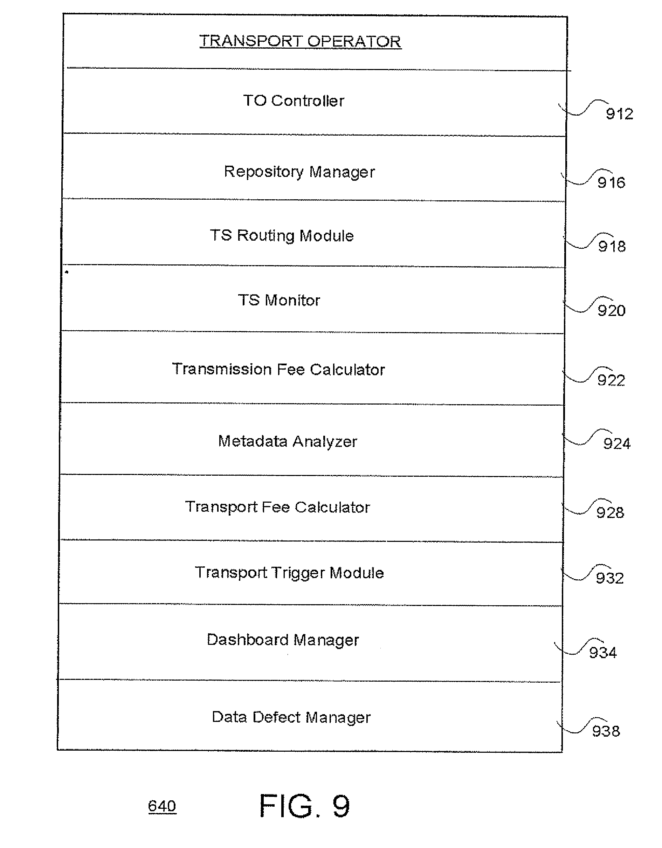

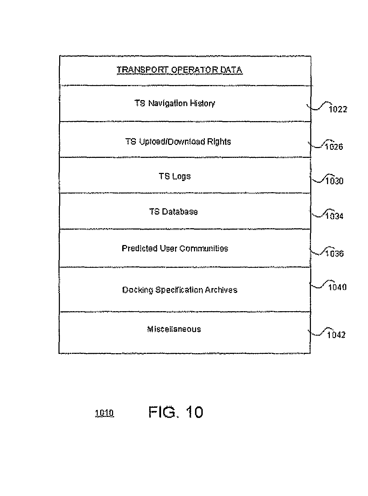

In the FIG. 6B embodiment, transport operator 640 may perform any appropriate or desired management or control functions for distribution system 110 (FIG. 1). Further details regarding the implementation and functionality of transport operator 640 are further discussed below in conjunction with FIGS. 9-10. In the FIG. 6B embodiment, miscellaneous information 642 may include any appropriate additional information or data for utilization by transport server 518. Additional details regarding the implementation and utilization of the FIG. 6B transport server 518 are discussed below in conjunction with FIGS. 9 and 10.

Referring now to FIG. 7, a block diagram for an alternate embodiment of the FIG. 1 information service 118 is shown, in accordance with one embodiment of the present invention. In the FIG. 7 embodiment, information service 118 may include, but is not limited to, one or more user devices 122, a transport server 518, a metadata server 730, one or more advertiser workstations 734, a bid server 738, an ad server 740, a storage server 744, and one or more rendering servers 748. In the FIG. 7 embodiment, certain elements of information service 118 communicate through an electronic pipeline 718.

In alternate embodiments, information service 118 may be implemented by utilizing components and configurations in addition to, or instead of, certain of those components and configurations discussed in conjunction with the FIG. 7 embodiment. For example, in certain embodiments, some or all of the servers shown in the FIG. 7 embodiment may be implemented as respective banks of similar servers in order to accommodate a greater amount of data transmission and data processing by information service 118.

In the FIG. 7 embodiment, certain elements of distribution system 110 communicate through an electronic pipeline 718 that may be implemented in any effective manner. For example, pipeline 718 may be implemented as one or more system busses or electronic paths that support communications through distribution system 110 by utilizing any appropriate hardwired or wireless techniques. In addition, in certain embodiments, pipeline 718 may be implemented by concurrently utilizing a plurality of different types of electronic communication methods.

During typical operation of the FIG. 7 information service 118, user devices 122 initially subscribe for distribution services from distribution system 110 by communicating with transport server 518 via any appropriate means. During the registration procedure, device users enter an agreement to allow distribution system 110 to collect and utilize certain specified user information that depends upon what level of privacy is preferred by the individual device users. The user devices 122 utilize a backbone library to create user metadata that defines the respective user information by utilizing a format and nomenclature that is consistent throughout distribution system 110. The user devices 122 then store the user metadata onto storage server 744.

In the FIG. 7 embodiment, advertisers utilize respective advertiser workstation A (734(a)) through advertiser workstation N (734(n)) to similarly create appropriate advertiser metadata that defines advertiser information regarding the respective advertisers. In particular, advertiser workstations 734 access the backbone library via pipeline 718 to create advertiser metadata that defines the respective advertiser information by utilizing a format and nomenclature that is consistent throughout distribution system 110. The advertiser workstations 734 may then store the advertiser metadata onto storage server 744 through pipeline 718. In alternate embodiments, any desired number of advertiser workstations 734 may be supported by information service 118.

In the FIG. 7 embodiment, metadata server 730 combines the user metadata and the advertiser metadata into a combined metadata file that is typically stored on storage server 744 over pipeline 718. Metadata server 730 may also periodically update the user and advertiser information in the metadata file to reflect current conditions or the occurrence of new events. In the FIG. 7 embodiment, the various advertiser workstations 734 may then access and analyze the metadata file through pipeline 718 to create respective bid metadata that reflect advertising bids from the various advertisers to transmit advertising information to appropriate user devices 122. The advertiser workstations 734 then send their bid metadata to bid server 738 via pipeline 718.

In the FIG. 7 embodiment, bid server 738 analyzes the respective bid metadata from the various advertiser workstations 734 according to predefined bidding criteria to generate bid results that indicate one or more "winning" advertisers. The predefined bidding criteria may comprise any appropriate information, including, but not limited to, the relevance of advertised product(s) to a specific device user, the amount of the bids offered by advertisers, and the relative cost of advertised product(s).

In the FIG. 7 embodiment, bid server 738 sends the bid results to the advertiser workstations 734 over pipeline 718. In response, the winning advertiser(s) send the appropriate advertising information (ads) to ad server 740 via pipeline 718. Upon receiving the advertisements from the advertiser workstations 734, ad server 740 automatically pushes/transmits the advertising to the appropriate targeted user device(s) 122 by utilizing one or more appropriate transport structures 210 (FIG. 2). In certain embodiments, user devices 122 may communicate with various transport structures 210 via a distributed computer network like the Internet. Finally, the user device(s) 122 may display the pushed ads to corresponding device users in any appropriate manner. Further details regarding the implementation and utilization of information service 318 are discussed below in conjunction with FIGS. 8-10.

Referring now to FIG. 8, a block diagram for one embodiment of a repository 538 from FIG. 5 is shown, in accordance with the present invention. In the FIG. 8 embodiment, repository 538 includes, but is not limited to, a central processing unit (CPU) 814, a memory 818, a display 838, and one or more input/output interface(s) (I/O interface(s)) 840. The FIG. 8 embodiment is presented for purposes of illustration, and in alternate embodiments, repository 538 may be implemented using components and configurations in addition to, or instead of, certain of those components and configurations discussed in conjunction with the FIG. 8 embodiment.

In the FIG. 8 embodiment, CPU 814 may be implemented to include any appropriate and compatible microprocessor device that preferably executes software instructions to thereby control and manage the operation of repository 538. The FIG. 8 display 838 may include any effective type of display technology including a cathode-ray-tube monitor or a liquid-crystal display device with an appropriate screen for displaying various information to a device user. In the FIG. 8 embodiment, I/O interface(s) 840 may include one or more input and/or output interfaces to receive and/or transmit any required types of information by ad server 538.

In the FIG. 8 embodiment, memory 818 may be implemented to include any combination of desired storage devices, including, but not limited to, read-only memory (ROM), random-access memory (RAM), and various types of non-volatile memory, such as floppy disks, memory sticks, compact disks, or hard disks. In the FIG. 8 embodiment, memory 818 includes, but is not limited to, a repository application 822, metadata 826, ads 830, and content 834.

In the FIG. 8 embodiment, repository application 822 may include program instructions that are preferably executed by CPU 814 to perform various functions and operations for repository 538. The particular nature and functionality of repository application 822 typically varies depending upon factors such as the specific type and particular functionality of the corresponding repository 538.

In the FIG. 8 embodiment, metadata 826 may include information or data associated with any entity or process in distribution system 110 (FIG. 1) In the FIG. 8 embodiment, ads 830 include advertising information that is provided to repository 538 from any appropriate entities, such as ad sources 540 (FIG. 5). Similarly, in the FIG. 8 embodiment, content 834 include electronic content that is provided to repository 538 from any appropriate entities, such as content sources 542 (FIG. 5). In accordance with the present invention, multiple instances of repository 538 may be locally implemented at appropriate locations to facilitate rapid access and economical transfers of information and data throughout distribution system 110.

Referring now to FIG. 9, a block diagram for one embodiment of the FIG. 6B transport operator 640 is shown, in accordance with the present invention. The FIG. 9 embodiment is presented for purposes of illustration, and in alternate embodiments, transport operator 640 may be implemented by utilizing components and functionalities in addition to, or instead of, certain of those components and functionalities discussed in conjunction with the FIG. 9 embodiment.

In the FIG. 9 embodiment, a transport operator (TO) controller 912 manages and coordinates overall operations for transport operator 640. The FIG. 9 transport operator 640 may utilize a repository manager 916 for operating and managing one or more storage repositories 538 to locally store appropriate information and data, as discussed above in conjunction with FIGS. 5 and 8. In the FIG. 9 embodiment, a transport structure (TS) routing module 918 may analyze various relevant metadata to determine the most economical and efficient transport routes in distribution system 110 for transporting specific information to targeted device users.

In the FIG. 9 embodiment, a transport structure (TS) monitor 920 continuously monitors and records the activities of all transport structures 210 in distribution system 110. The FIG. 9 transport operator 640 utilizes a transmission fee calculator 922 to determine appropriate transmission fees to be paid for transporting information and data through distribution system 110. In certain embodiments, predefined fee factors such as the number of transport occurrences, specific transport routes, and the transferred file sizes may be utilized to calculate appropriate transmission fees.

In the FIG. 9 embodiment, a metadata analyzer 924 may analyze any appropriate types of metadata or other information to match content providers and advertisers with appropriate targeted device users. In addition, metadata analyzer 924 may utilize the metadata to create categories or communities of device users that are predicted to have interest in receiving corresponding content or advertising through distribution system 110. In the FIG. 9 embodiment, a transport fee calculator 928 may determine appropriate transport fees for charging device users of user devices 122 to receive targeted advertising and content through distribution system 110.

The FIG. 9 transport operator 840 may utilize a transport trigger module 932 to monitor current levels of targeted device users for determining whether a sufficiently large number of targeted device users currently exists to financially justify transmitting targeted ads and/or content to those device users. When a pre-defined transmission trigger threshold is reached, then transport trigger module 932 may authorize transport operator 840 to transmit appropriate information to the targeted device users.

In the FIG. 9 embodiment, a dashboard manager 934 may be utilized to generate and manage a dashboard graphical user interface (dashboard GUI) that displays any relevant information pertaining to activities of distribution system 110. For example, the dashboard GUI may display information related to any of the functions of transport operator 640 for observation by and interaction with a system administrator. In addition, information from transport operator data 1010 (see FIG. 10) may also be displayed on the dashboard GUI.

In the FIG. 9 embodiment, a data defect manager 938 may remove and quarantine erroneous or defective metadata files or other harmful information from transport structures 210 or elsewhere in distribution system 110. The data defect manager 938 may then either repair or destroy and replace the defective files. Further details regarding the utilization of the FIG. 9 transport operator 640 are discussed below in conjunction with FIG. 10.

Referring now to FIG. 10, a block diagram for one embodiment of transport operator data 1010 is shown, in accordance with the present invention. The FIG. 10 embodiment is presented for purposes of illustration, and in alternate embodiments, transport operator data 1010 may be implemented by utilizing elements and configurations in addition to, or instead of, certain of those elements and configurations discussed in conjunction with the FIG. 10 embodiment.

The FIG. 10 transport operator data 1010 includes, but is not limited to, various types of information that is collected or utilized by transport operator 640 to perform corresponding management and control functions for distribution system 110. Transport operator data 1010 may be stored in any appropriate location(s) in distribution system 110. For example, transport operator data 1010 may be stored in transport database 634 (FIG. 6B) of transport server 518.

In the FIG. 10 embodiment, transport structure (TS) navigation history 1022 may include any relevant information regarding the navigation of transport structures 210 in distribution system 110. In the FIG. 10 embodiment, transport structure (TS) upload/download rights 1026 include predefined authorized downloading and unloading functions and any downloading and/or uploading restrictions for transport structures 210. In the FIG. 10 embodiment, transport structure (TS) logs 1030 include records of any or all activities of the transport structures 210 in distribution system 110.

In the FIG. 10 embodiment, transport structure (TS) database 1034 includes identification and authorization information for each of the transport structures 210 in distribution system 110. In the FIG. 10 embodiment, predicted user communities 1036 include information that categorizes device users of user devices 122 into communities that are predicted to have interest in corresponding types of advertising and/or content.

In the FIG. 10 embodiment, docking specification archives 1040 includes appropriate technical information regarding docking and navigating to and from different entities in distribution system 110. Transport operator 640 may therefore readily refer to docking specification archives 1040 to obtain required information for communicating between transport structures 210 and the various devices in distribution system 110. Miscellaneous information 1042 may include any other information or data for utilization by transport operator 640.

From the foregoing it can be seen that the transport operator 640 provides a robust and coordinated means for managing operations in distribution system 110 (FIG.1). For example, transport operator 640 supports a dashboard GUI that uses metadata to track the movement and activity of all the transport structures 210 under its control. Transport operator 640 controls each transport structure's 210 initial launch, ongoing transport movements, and authorizes the loading and unloading of information, advertising, and content at licensed docking ports.

The transport operator 640 also maintains work repositories 538 in local regions around the globe for receiving, working on, and staging the pickup, transport, and delivery of information, advertising, and content to and from authorized recipients. In addition, transport operator 640 provides routing instructions to transport structures 210 based upon the most economical transport routes, bit transfer rates, and negotiates these terms with Internet Service Providers (ISPs) and fiber-optic bandwidth providers for the most cost-effective transport of information, advertising, and content.

The transport operator 640 maintains comprehensive metadata logs for each transport structure 210, including its current inventory of information, advertising, and content, it's docking ports, loading and off-loading of information, advertising, and content, bit rates, and the routes and pipelines traveled. The transport operator 640 functions as an aggregator of device users for direct commercial messaging from advertisers based upon user-licensed profiles which are constantly updated with private consumer information provided to the transport operator 640 from user devices 122 and continually uploaded to the transport structures 210.

The transport operator 640 then releases this information (pursuant to the device user's licensed authorization) to the advertisers that fit the consumer's requested product or service needs. The transport operator 640 negotiates with the advertisers a price for accessing the consumer, including best product pricing, best product or service terms, and best cost-per-thousand (CPM) as the fee to the transport operator 640.

The transport operator 640 can also package for the device users both the commercial messaging and the device users' predictive or intuitive content choices for advertiser-supplied viewing, if enough device users are aggregated in a commercial messaging pod and a like-content match occurs to trigger the packaged release. For at least the foregoing reasons, the present invention provides an improved system and method for effectively utilizing a transport operator in an electronic network.

The invention has been explained above with reference to certain embodiments. Other embodiments will be apparent to those skilled in the art in light of this disclosure. For example, the present invention may readily be implemented using certain configurations and techniques other than those described in the specific embodiments above. Additionally, the present invention may effectively be used in conjunction with systems other than those described above. Therefore, these and other variations upon the discussed embodiments are intended to be covered by the present invention, which is limited only by the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A system for supporting an information distribution procedure, comprising:
an information service that is configured to provide information distribution services by performing said information distribution procedure through an electronic network;
user devices that device users utilize to communicate with said information service for receiving said information distribution services; and
a transport operator that performs transport management functions to support said information distribution procedure.

2. The system of claim 1 further comprising transport structures that communicate with said user devices, said transport structures collecting metadata for providing selected information from said information service to targeted ones of said device users.

3. The system of claim 2 further comprising storage repositories that are distributed throughout said electronic network to provide local access for said transport structure to obtain or deposit required metadata, advertising information, and electronic content, said storage repositories being controlled by a repository manager of said transport operator, said selected information including said advertising information and said electronic content.

4. The system of claim 1 wherein said transport operator is implemented on a transport server, said transport operator including a dashboard manager that generates and displays a dashboard graphical user interface that a system administrator uses to view and control operating parameters of said information distribution procedure.

5. The system of claim 2 wherein said transport operator includes a routing module that determines optimal transport routes for transporting said selected information to said device users.

6. The system of claim 2 wherein said transport operator includes a transport structure monitor that continuously monitors and records activities of said transport structures, said transport operator including a transmission fee calculator that determine appropriate transmission fees to be paid for transporting said selected information, said transport operator including a transport fee calculator that determines appropriate transport fees to charge said device users for receiving said selected information.

7. The system of claim 2 wherein said transport operator includes a metadata analyzer that analyzes said metadata to match said selected information with said targeted ones of said device users, said metadata analyzer also analyzing said metadata to create communities of said device users that are predicted to have an interest in receiving said selected information.

8. The system of claim 1 wherein said transport operator includes a transport trigger module to monitor current levels of targeted device users for determining whether a sufficiently large number of said targeted device users currently exist to financially justify transmitting said selected information, said transport trigger module authorizing said transport operator to transmit said selected information when a pre-defined transmission trigger threshold is reached.

9. The system of claim 2 wherein said transport operator includes a data defect manager that removes and quarantines erroneous or defective information from said transport structures, said data defect manager then either repairing or destroying and replacing said defective or erroneous information.

10. The system of claim 2 wherein said transport operator maintains and updates transport operator data for supporting said information distribution procedure, said transport operator data including transport structure navigation histories of said transport structures, transport structure logs of all activities of said transport structures, and transport structure upload/download rights regarding predefined authorized downloading and uploading functions and any downloading and/or uploading restrictions for said transport structures.

11. A user device for supporting an information distribution procedure, comprising:
a device application that said user device utilizes to communicate with an information service for receiving information distribution services;
a transport structure that that communicates with said user device, said transport structure collecting metadata for targeting selected information from said information service to a device user of said user device; and
a communication module that receives one or more advertisements from said information service, said one or more advertisements being targeted at said device user by utilizing said metadata, said communication module also communicating with a transport operator that performs transport management functions to support said information distribution procedure.

12. The user device of claim 11 wherein said selected information includes advertising information and electronic content.

13. The user device of claim 11 further comprising storage repositories that are distributed throughout said electronic network to provide local access for said transport structure to obtain or deposit required metadata, information, advertising, and content, said storage repositories being controlled by a repository manager of said transport operator.

14. The user device of claim 11 wherein said transport operator is implemented on a transport server, said transport operator including a dashboard manager that generates and displays a dashboard graphical user interface that a system administrator uses to view and control operating parameters of said information distribution procedure.

15. The user device of claim 11 wherein said transport operator includes a routing module that determines optimal transport routes for transporting said selected information to said device users.
